(19) **Europäisches Patentamt / European Patent Office / Office européen des brevets**

(11) **EP 4 542 682 A1**

(12) **EUROPEAN PATENT APPLICATION**
published in accordance with Art. 153(4) EPC

(43) Date of publication:
**23.04.2025 Bulletin 2025/17**

(21) Application number: **23823679.8**

(22) Date of filing: **29.05.2023**

(51) International Patent Classification (IPC):
$H01M\ 4/525^{(2010.01)}$    $C01G\ 53/00^{(2025.01)}$
$C22B\ 1/02^{(2006.01)}$    $C22B\ 3/06^{(2006.01)}$
$C22B\ 3/22^{(2006.01)}$    $C22B\ 3/44^{(2006.01)}$
$C22B\ 7/00^{(2006.01)}$    $C22B\ 23/00^{(2006.01)}$
$C22B\ 26/12^{(2006.01)}$    $C22B\ 47/00^{(2006.01)}$
$H01M\ 4/131^{(2010.01)}$    $H01M\ 4/505^{(2010.01)}$
$H01M\ 10/54^{(2006.01)}$

(52) Cooperative Patent Classification (CPC):
**C01G 53/00; C22B 1/02; C22B 3/06; C22B 3/22; C22B 3/44; C22B 7/00; C22B 23/00; C22B 26/12; C22B 47/00; H01M 4/131; H01M 4/505; H01M 4/525; H01M 10/54**

(86) International application number:
**PCT/JP2023/019970**

(87) International publication number:
**WO 2023/243385 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.06.2022 JP 2022096429**
**17.10.2022 JP 2022165994**

(71) Applicants:
• **Dowa Eco-System Co., Ltd.**
**Tokyo 101-0021 (JP)**
• **Akita University**
**Akita-shi**
**Akita 010-8502 (JP)**

(72) Inventors:
• **YODOSE, Tatsuya**
**Tokyo 101-0021 (JP)**
• **WATANABE, Ryoei**
**Tokyo 101-0021 (JP)**
• **MORITA, Yoshinori**
**Tokyo 101-0021 (JP)**
• **KUMAGAI, Seiji**
**Akita-shi, Akita 010-8502 (JP)**
• **ABE, Yusuke**
**Akita-shi, Akita 010-8502 (JP)**

(74) Representative: **Müller-Boré & Partner**
**Patentanwälte PartG mbB**
**Friedenheimer Brücke 21**
**80639 München (DE)**

(54) **RECYCLED POSITIVE ELECTRODE MATERIAL, METHOD FOR PRODUCING SAME, METHOD FOR USING RECYCLED POSITIVE ELECTRODE MATERIAL, RECYCLED POSITIVE ELECTRODE, AND LITHIUM ION SECONDARY BATTERY**

(57) There is provided a recycled positive-electrode material that includes: lithium, nickel, cobalt, and manganese; aluminum in an amount of 0.3% by mass or greater and 3% by mass or less; copper, iron, or both in an amount of less than 1% by mass.

EP 4 542 682 A1

**Description**

TECHNICAL FIELD

The present invention relates to a recycled positive-electrode material and a method of producing the recycled positive-electrode material, a method of using the recycled positive-electrode material, a recycled positive electrode, and a lithium ion secondary battery.

BACKGROUND ART

Use of lithium ion secondary batteries has been rapidly increasing in various fields, including the field of electronics and the automotive field. Particularly in the automotive field, the demand for large-scale batteries is expected to rapidly increase due to the increase in the capacity of units for use in hybrid vehicles and electric vehicles. Corresponding to the above increase in the demand for the lithium ion secondary batteries, the amount of lithium ion secondary batteries that have reached the end of the product life also increases.
In lithium ion secondary batteries, precious metal materials are used in a positive-electrode material. Thus, recycling of the metal materials from the lithium ion secondary batteries after the end of the product life is an industrially important challenge.
For example, there is a proposed method in which impurities are removed from waste batteries, waste positive-electrode materials, or a mixture of waste batteries and waste positive-electrode materials, which include impurities and a metal group including at least two selected from the group consisting of Co, Ni, and Mn, thereby recovering the metal group as a mixture of salts of the above metals (see, for example, Patent Document 1). In the proposed method, a positive-electrode material is produced using the mixture of the recovered metal salts.

CITATION LIST

PATENT LITERATURE

Patent Document 1: Japanese Patent No. 5847742

SUMMARY OF THE INVENTION

TECHNICAL PROBLEM

However, it is important for an environmental load associated with recycling to be small and for a recycling cost to be low in order to recycle metal materials from lithium ion secondary batteries after the end of the product life. In the case where a positive-electrode material is produced using nickel, cobalt, and manganese recovered from lithium ion secondary batteries after the end of the product life, a recycled lithium ion secondary battery produced using the produced positive-electrode material needs to have excellent performance comparable with a typical lithium ion secondary battery (a lithium ion secondary battery including a positive-electrode material that does not include metal materials recycled from lithium ion secondary batteries is referred to as a "typical lithium ion secondary battery" hereinafter). However, the method disclosed in Patent Document 1 uses, for example, a complicated separation process and an expensive extracting agent, and therefore the method causes concerns about a large environmental load associated with recycling and a high cost.
The present invention aims to solve the above various problems existing in the related art, and achieve the following object. Specifically, the object of the present invention is to provide a recycled positive-electrode material that can be produced from lithium ion secondary batteries after the end of product life with a small environmental load and at a low recycling cost, and has excellent performance comparable with a positive-electrode material of a typical lithium ion secondary battery, and is to provide a method of producing the recycled positive-electrode material, a method of using the recycled positive-electrode material, a recycled positive electrode, and a lithium ion secondary battery.

Solution to Problem

Means for solving the above problems are as follows.

<1> A recycled positive-electrode material includes:

lithium, nickel, cobalt, and manganese;
aluminum in an amount of 0.3% by mass or greater and 3% by mass or less; and

copper, iron, or both in an amount of less than 1% by mass.

<2> The recycled positive-electrode material as described in <1> further includes calcium, magnesium, or both in an amount of 0.02% by mass or greater and 0.1% by mass or less.

<3> The recycled positive-electrode material according to <1> or <2>, wherein the amount of the aluminum is 0.5% by mass or greater and 2.5% by mass or less.

<4> The recycled positive-electrode material according to <1> or <2>, wherein an amount of the lithium is 5% by mass or greater and 9% by mass or less.

<5> The recycled positive-electrode material according to <1> or <2>,

wherein an amount of the copper is 0.01% by mass or less, and an amount of the iron is 0.6% by mass or less.

<6> The recycled positive-electrode material according to <5>,

wherein the amount of the copper is 0.0005% by mass or greater and 0.005% by mass or less, and the amount of the iron is 0.002% by mass or greater and 0.6% by mass or less.

<7> The recycled positive-electrode material according to <1> or <2>, wherein the amount (% by mass) of the aluminum (Al), an amount (% by mass) of the copper(Cu), and an amount (% by mass) of the iron (Fe) satisfy the following formula:

$$Al/(Al + Cu + Fe) \geq 0.4.$$

.

<8> The recycled positive-electrode material according to <1> or <2>, wherein a total amount of the nickel, the cobalt, and the manganese is 50% by mass or greater.

<9> A method of producing the recycled positive-electrode material of <1> or <2>, the method including:

a process of performing a heat treatment on a lithium ion secondary battery to obtain a heat-treated product; a process of crushing the heat-treated product to obtain a crushed product; a process of performing physical sorting on the crushed product to obtain a physically processed product; a process of adding an acidic solution to the physically processed product to obtain an acid-treated solution; a process of adding an oxidizing agent to the acid-treated solution, followed by adding an alkaline solution, to precipitate iron oxide, and separating the iron hydroxide by filtration; and a process of mixing a filtrate obtained after the separation of the iron hydroxide with an alkaline solution.

<10> The method of producing the recycled positive-electrode material, according to <9>, further including a process of adding a lithium source.

<11> A method of using a recycled positive-electrode material, the method including:

a process of assembling a lithium ion secondary battery including the recycled positive-electrode material of <1> or <2>; and a process of charging the lithium ion secondary battery assembled in the assembling from approximately 0 V to a range of 4.3 V to 4.6 V of a cell voltage, followed by charging and discharging in a cell voltage range having a lower end of 0 V to 3.5 V and having an upper end of 4.3 V to 4.6 V to activate the lithium ion secondary battery.

<12> A recycled positive electrode, including: the recycled positive-electrode material of <1> or <2>.

<13> A lithium ion secondary battery, including: the recycled positive electrode of <12>.

Effects of Invention

According to the present invention, the above various problems existing in the related art can be solved, and a recycled positive-electrode material that can be produced from lithium ion secondary batteries after the end of product life with a small environmental load and at a low recycling cost, and has excellent performance comparable with a positive-electrode material of a typical lithium ion secondary battery can be provided. In addition, according to the present invention, a method of producing the recycled positive-electrode material, a method of using the recycled positive-electrode material, a recycled positive electrode, and a lithium ion secondary battery can be provided.

Brief Description of Drawings

[Fig. 1] Fig. 1 is a flowchart illustrating one example of a method of producing a recycled positive-electrode material of the present invention.

[Fig. 2] Fig. 2 is a schematic view illustrating one example of a coin-cell lithium ion secondary battery used in Examples.

[Fig. 3] Fig. 3 is a graph illustrating a relation between the number of cycles and a specific capacity of the positive-electrode material in a cycle test of a full cell of Example 1.

[Fig. 4] Fig. 4 is a graph illustrating a relation between the number of cycles and a specific capacity of the positive-electrode material in a cycle test of a full cell of Comparative Example 1.

[Fig. 5] Fig. 5 is a graph illustrating a relation between the number of cycles and a specific capacity of the positive-electrode material in a cycle test of a full cell of Comparative Example 2.

[Fig. 6] Fig. 6 is a graph illustrating a relation between a specific capacity and cell voltage of the positive-electrode material in the cycle test of the full cell of Example 1.

[Fig. 7] Fig. 7 is a graph illustrating a relation between a specific capacity and cell voltage of the positive-electrode material in the cycle test of the full cell of Comparative Example 1.

[Fig. 8] Fig. 8 is a graph illustrating a relation between a specific capacity and cell voltage of the positive-electrode material in the cycle test of the full cell of Comparative Example 2.

Description of Embodiments

(Recycled positive-electrode material)

The recycled positive-electrode material of the present invention includes: lithium, nickel, cobalt, and manganese; aluminum in an amount of 0.3% by mass or greater and 3% by mass or less; and copper, iron, or both in an amount of less than 1% by mass. The recycled positive-electrode material may further include other components.

When a lithium ion secondary battery using the recycled positive-electrode material of the present invention is charged and discharged at the maximum cell voltage that is higher, by 0.1 V to 0.4 V, than 4.2 V, which is the maximum cell voltage for typical charging and discharging, deintercalation of Li from the recycled positive electrode readily occurs, and Li that has once detached can go through repetitive intercalation and deintercalation. Therefore, the recycled positive-electrode material of the present invention and the lithium ion secondary battery using the recycled positive-electrode material can achieve the same level of specific capacity as a lithium ion secondary battery using a typical positive-electrode material (a positive-electrode material that does not include metal materials recycled from a lithium ion secondary battery is referred to as a "typical positive-electrode material" hereinafter), and exhibits cycle performance superior to cycle performance of the lithium ion secondary battery using the typical positive-electrode material.

In the present invention, the lithium, the nickel, the cobalt, the manganese, the aluminum, the copper, and the iron respectively include metal elements of lithium, nickel, cobalt, manganese, aluminum, copper, and iron, and also include metal elements of the foregoing included in oxides or hydroxides of the above metal elements (e.g., compounds bonded to other elements). Moreover, the term "oxide" includes various metal oxides, composite oxides including various metals, or both; and the term "hydroxide" includes various metal hydroxides, composite hydroxides including various metals, or both.

The amount of the aluminum is 0.3% by mass or greater and 3% by mass or less, preferably 0.5% by mass or greater and 2.5% by mass or less, and more preferably 0.7% by mass or greater and 1.5% by mass or less. When the amount of the aluminum is 0.3% by mass or greater and 3% by mass or less, cycle performance superior to cycle performance of a lithium ion secondary battery using a typical electrode material is exhibited in a range of the maximum cell voltage that is higher, by 0.1 V to 0.4 V, than 4.2 V, which is the maximum cell voltage for typical charging and discharging so that a difference of the recycled positive-electrode material from a typical positive-electrode material of a lithium ion secondary battery becomes clear.

The amount of the lithium is preferably 4% by mass or greater and 10% by mass or less, more preferably 5% by mass or greater and 9% by mass or less, and yet more preferably 7% by mass or greater and 8.5% by mass or less.

The total amount of the nickel, cobalt, and manganese is preferably 50% by mass or greater, and more preferably 55% by mass or greater. The amount of each of the nickel, cobalt, and manganese can be adjusted according to intended properties of a battery cell. In case of a positive-electrode material for NCM811, for example, nickel can be included in an amount of 15% by mass or greater and 52% by mass or less, cobalt can be included in an amount of 6% by mass or greater and 25% by mass or less, and manganese can be included in an amount of 6% by mass or greater and 25% by mass or less. In the case of a positive-electrode material for NCM111, each of nickel, cobalt, and manganese can be included in an amount of 10% by mass or greater and 30% by mass or less.

The recycled positive-electrode material of the present invention includes copper, iron, or both in an amount of less than 1% by mass.

The amount of the copper is less than 1% by mass, preferably 0.01% by mass or less, and more preferably 0.0005% by mass or greater and 0.005% by mass or less.

The amount of the iron is less than 1% by mass, preferably 0.6% by mass or less, and more preferably 0.002% by mass or greater and 0.6% by mass or less.

When the copper, the iron, or the both are included in the amount of less than 1% by mass, cycle performance superior to cycle performance of a lithium ion secondary battery using a typical electrode material is exhibited in a range of the maximum cell voltage that is higher, by 0.1 V to 0.4 V, than 4.2 V, which is the maximum cell voltage for typical charging and discharging, so that a difference of the recycled positive-electrode material from a typical positive-electrode material of a lithium ion secondary battery becomes clear.

The recycled positive-electrode material preferably includes calcium, magnesium, or both. The amount of the calcium, the magnesium, or both is preferably 0.02% by mass or greater and 0.1% by mass or less, and more preferably 0.04% by mass or greater and 0.09% by mass or less.

If metals recycled from a lithium ion secondary battery are used, calcium and magnesium are often contained. However, it is confirmed that the above range of the amount does not largely affect cell characteristics of a battery cell using the recycled positive-electrode material.

The amount (% by mass) of the aluminum (Al), the amount (% by mass) of the copper (Cu), and the amount (% by mass) of the iron (Fe) preferably satisfy the following formula $Al/(Al + Cu + Fe) \geq 0.4$, more preferably satisfy the following formula $Al/(Al + Cu + Fe) \geq 0.5$, yet more preferably satisfy the following formula $Al/(Al + Cu + Fe) \geq 0.6$, particularly preferably satisfy the following formula $Al/(Al + Cu + Fe) \geq 0.7$, more particularly preferably satisfy the following formula $Al/(Al + Cu + Fe) \geq 0.8$, and yet more particularly preferably satisfy the following formula $Al/(Al + Cu + Fe) \geq 0.9$.

When the following formula $Al/(Al + Cu + Fe) \geq 0.4$ is satisfied, the recycled positive-electrode material demonstrates excellent cycle performance compared with a typical lithium ion secondary battery in the range of the maximum cell voltage that is higher, by 0.1 V to 0.4 V, than 4.2 V, which is the maximum cell voltage for typical charging and discharging.

The amount of each of the metal elements can be measured, for example, by ICP spectroscopy, X-ray fluorescence spectroscopy, or the like.

<Other components>

Other components are not particularly limited, and such components may be included as long as an effects of the present invention can be exhibited. Examples of the above other components include Na, O, fluorine (F), and the like.

The recycled positive-electrode material of the present invention that includes: lithium, nickel, cobalt, and manganese; aluminum in an amount of 0.3% by mass or greater and 3% by mass or less; and copper, iron, or both in an amount of less than 1% by mass can be suitably produced by the below-described method of producing the recycled positive-electrode material of the present invention.

(Method of producing recycled positive-electrode material)

The method of producing the recycled positive-electrode material of the present invention is a method of producing the recycled positive-electrode material of the present invention. The method of producing the recycled positive-electrode material includes a heat treatment step, a crushing step, a physical sorting step, an acid treatment step, an iron removal step, and an alkali treatment step, preferably further include a lithium-source addition step, and may further include other steps, as necessary.

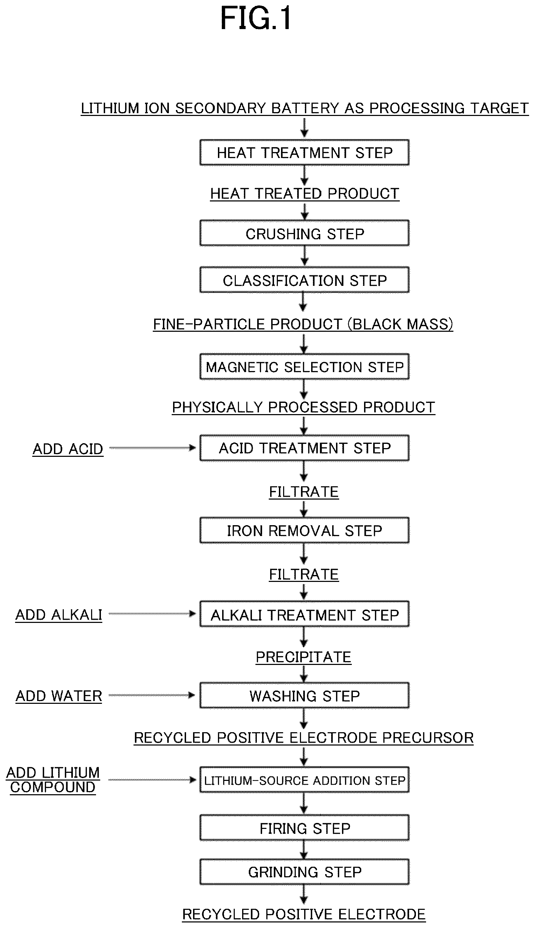

Fig. 1 is a flowchart illustrating one example of the method of producing the recycled positive-electrode material of the present invention. The method of producing the recycled positive-electrode material of the present invention will be described with reference to Fig. 1 hereinafter.

<Lithium ion secondary battery serving as processing target>

A lithium ion secondary battery serving as a processing target is not particularly limited, and may be appropriately selected according to the intended purpose. Examples of the lithium ion secondary battery serving as the processing target include: defective lithium ion secondary batteries produced during the production of lithium ion secondary batteries; lithium ion secondary batteries discarded due to the end of life of the devices using the lithium ion secondary batteries; used lithium ion secondary batteries discarded due to the end of life; and the like.

The lithium ion secondary battery is a secondary battery in which lithium ions move between a positive electrode and a negative electrode, thereby charging and discharging the secondary battery. Examples of the lithium ion secondary battery include a lithium ion secondary battery including a positive electrode, a negative electrode, a separator, an electrolyte (an electrolytic solution including an organic solvent or a solid electrolyte), an outer container that is a battery case, and the like.

A shape, structure, size, material, and the like of the lithium ion secondary battery serving as the processing target are not particularly limited, and may be appropriately selected according to the intended purpose. Examples of the shape of the lithium ion secondary battery include laminate shapes, cylindrical shapes, button shapes, coin shapes, square shapes, flat shapes, and the like.

-Positive electrode-

The positive electrode is not particularly limited, as long as the positive electrode includes a positive-electrode material on a positive-electrode current collector. The positive electrode may be appropriately selected according to the intended purpose. A shape of the positive electrode is not particularly limited, and may be appropriately selected according to the intended purpose. Examples of the shape of the positive electrode include plate shapes, sheet shapes, and the like.

A shape, structure, size, material, and the like of the positive-electrode current collector are not particularly limited, and may be appropriately selected according to the intended purpose. Examples of the shape of the positive-electrode current collector include foil shapes and the like. Examples of the material of the positive-electrode current collector include stainless steel, nickel, aluminum, copper, titanium, tantalum, and the like. Among the above materials, aluminum is commonly used.

The constituent components of the positive-electrode material can be appropriately selected according to the intended purpose. For example, the positive-electrode material includes a positive-electrode active material including at least rare and precious substances, and optionally includes a conductive agent and a binder resin. The rare and precious substances are not particularly limited, and may be appropriately selected according to the intended purpose, but cobalt, nickel, and manganese are commonly used.

Examples of the positive-electrode active material include lithium cobalt oxide ($LiCoO_2$), lithium nickel oxide ($LiNiO_2$), lithium manganese oxide ($LiMn_2O_4$), lithium cobalt nickel oxide ($LiCo_{1/2}Ni_{1/2}O_2$), a ternary material ("NMC," i.e., $LiNi_xCo_yMn_zO_2$, where $x + y + z = 1$, and x, y, and z are each greater than 0 and less than 1), a nickel-based material ("NCA," i.e., $LiNi_xCo_yAl_zO_2$, where $x + y + z = 1$, and x, y, and z are each greater than 0 and less than 1), a composite of any combination of the foregoing, where $x + y + z = 1$, and x, y, and z are each greater than 0 and less than 1, and the like.

The conductive agent is not particularly limited, and may be appropriately selected according to the intended purpose. Examples of the conductive agent include carbon black, graphite, carbon fibers, metal carbide, and the like.

The binder resin is not particularly limited, and may be appropriately selected according to the intended purpose. Examples of the binder resin include: homopolymers or copolymers of vinylidene fluoride, tetrafluoroethylene, acrylonitrile, ethylene oxide, and the like; styrene-butadiene rubber; and the like.

-Negative electrode-

The negative electrode is not particularly limited, as long as the negative electrode includes a negative-electrode material on a negative-electrode current collector. The negative electrode may be appropriately selected according to the intended purpose. A shape of the negative electrode is not particularly limited, and may be appropriately selected according to the intended purpose. Examples of the shape include plate shapes, sheet shapes, and the like.

A shape, structure, size, material, and the like of the negative-electrode current collector are not particularly limited, and may be appropriately selected according to the intended purpose. Examples of the shape of the negative-electrode current collector include foil shapes, and the like. Examples of the material of the negative-electrode current collector include stainless steel, nickel, aluminum, copper, titanium, tantalum, and the like. Among the above materials, copper is preferred.

The negative-electrode material is not particularly limited, and may be appropriately selected according to the intended purpose. Examples of the negative-electrode material include: carbon materials, such as graphite, hard carbon, and the like; titanates; silicon; composites of the foregoing; and the like.

Note that each of the positive-electrode current collector and the negative-electrode current collector has the structure of a laminate. The laminate is not particularly limited, and may be appropriately selected according to the intended purpose.

<Heat treatment step>

The heat treatment step is a process of performing a heat treatment on a lithium ion secondary battery to obtain a heat-treated product.

As illustrated in Fig. 1, the heat treatment step is performed on the lithium ion secondary battery serving as a processing target. The heat-treatment temperature is not particularly limited, as long as the heat-treatment temperature is a temperature that is equal to or higher than a melting point of the positive-electrode current collector or a melting point of the negative-electrode current collector, whichever lower, and is lower than the melting point of the positive-electrode current collector or the melting point of the negative-electrode current collector, whichever higher. The heat-treatment temperature may be appropriately selected according to the intended purpose. The heat-treatment temperature is preferably 670°C or higher, more preferably 670°C or higher and 1,100°C or lower, yet more preferably 700°C or higher and 1,000°C or lower, and particularly preferably 700°C or higher and 900°C or lower. When the heat-treatment temperature is 670°C or higher, the current collector having the lower melting point compared to the other current collector becomes sufficiently brittle. When the heat-treatment temperature is 1,100°C or lower, the current collector having the lower melting point, the current collector having the higher melting point, and the outer container can be inhibited from becoming brittle so that separation efficiency of the current collectors and the outer container through crushing and classification can be maintained. In the case where the outer container of the lithium ion secondary battery is melted during the heat treatment, a tray is disposed underneath the lithium ion secondary battery to recover the molten metal, thereby easily separating the metal derived from the outer container from the electrode portions.

In the case of a laminate in which the positive-electrode current collector is an aluminum foil and the negative-electrode current collector is copper, for example, when the heat treatment is performed at the predetermined heat-treatment temperature, the positive-electrode current collector formed of the aluminum foil becomes brittle so that the positive-electrode current collector is easily crushed into small particles in the below-described crushing step. The embrittlement of the positive-electrode current collector occurs due to melting or an oxidation reaction. Moreover, the aluminum that is melted and drips down is recovered in the tray. On the other hand, the negative-electrode current collector formed of copper is not melted because the heat treatment is performed at a temperature lower than the melting point of copper. Therefore, copper of the negative-electrode current collector can be highly precisely separated in the below-described magnetic separation step. When either the laminate or the lithium ion secondary battery is placed in an oxygen-shielding container and subjected to the heat treatment, the positive-electrode current collector formed of the aluminum foil is melted to become brittle so that the aluminum foil is readily crushed into small particles in the below-described crushing step. On the other hand, the negative-electrode current collector formed of copper goes through the heat treatment in a state where the oxygen partial pressure is low due to the oxygen-shielding effect of the oxygen-shielding container and the reducing effect of the negative-electrode active material, such as carbon, included in the laminate or the lithium ion secondary battery, and therefore embrittlement of the negative-electrode current collector due to oxidation does not occur. Thus, the positive-electrode current collector is finely crushed by crushing performed in the crushing step, and the negative-electrode current collector is present as a coarse-particle product after the crushing, which will be then effectively and highly precisely sorted in the below described classification and sorting step.

Duration of the heat treatment is not particularly limited, and may be appropriately selected according to the intended purpose. The duration of the heat treatment is preferably 1 minute or longer and 5 hours or shorter, more preferably 1 minute or longer and 2 hours or shorter, and particularly preferably 1 minute or longer and 1 hour or shorter. The duration of the heat treatment may be any duration during which the current collector having the lower melting point compared to the other current collector reaches a desired temperature. The temperature-retention time may be short. The duration of the heat treatment in the particularly preferred range is advantageous in view of a cost of the heat treatment.

A method of the heat treatment is not particularly limited, and may be appropriately selected according to the intended purpose. Examples of the method of the heat treatment include methods using a heat treatment furnace. Examples of the heat treatment furnace include rotary kilns, fluidized bed furnaces, tunnel kilns, batch-type furnaces (e.g., muffle furnaces), cupola furnaces, stoker furnaces, and the like.

The atmosphere used for the heat treatment is not particularly limited, and may be appropriately selected according to the intended purpose. The heat treatment can be performed in the ambient air. The atmosphere is preferably an atmosphere having a low oxygen concentration in view of recovery of metals derived from the positive-electrode current collector and metals derived from the negative-electrode current collector at high purity and with high recovery rates.

As a method of achieving the low oxygen atmosphere, the lithium ion secondary battery or laminate may be placed in an oxygen-shielding container and subjected to the heat treatment. A material of the oxygen-shielding container is not particularly limited, as long as the material does not melt at the above-described heat-treatment temperature. The material of the oxygen-shielding container may be appropriately selected according to the intended purpose. Examples of the material include iron, stainless steel, and the like. In order to release the gas pressure generated by combustion of an electrolytic solution in the lithium ion secondary battery or laminate, an opening is preferably formed in the oxygen-shielding container. An area of the opening is preferably adjusted to be 12.5% or less relative to the surface area of the outer container. The area of the opening is preferably 6.3% or less relative to the surface area of the outer container in which the opening is formed. When the area of the opening is greater than 12.5% relative to the surface area of the outer container, most parts of the current collectors are likely to be oxidized by the heat treatment. A shape, size, position, and the like of the opening are not particularly limited, and may be appropriately selected according to the intended purpose.

If desired, qualitative and quantitative analysis of the metal elements contained in the heat-treated product obtained in the heat treatment step is preferably performed by X-ray fluorescence spectroscopy or the like. This is because the metal components contained in the heat-treated product may vary depending on the lithium ion secondary battery serving as a processing target.

According to the qualitative and quantitative analysis result, the heat-treated product is divided into groups according to the composition of the metal components, and each group of the heat-treated product having the same composition is sent to the below-described crushing step. This is a preferred configuration from the viewpoint of allowing the composition of the metal components of the recycled positive-electrode material to be stable.

<Crushing step>

The crushing step is a step of crushing the heat-treated product to obtain a crushed product.

For the crushing, examples of a method of crushing by impact include: a method in which the heat-treated product is thrown at a collision plate using a rotating striking plate to thereby apply impact force to the heat-treated product; and a method where the heat-treated product is beat by a rotating hitting element (beater). For example, the above methods can be carried out by a hammer crusher, a chain crusher, or the like. Examples of the method also include a method where the heat-treated product is beat by balls or rods of ceramics, iron, or the like. The above method can be carried out by a ball mill, a rod mill, or the like. Furthermore, the method can be performed by crushing the heat-treated product with a twin-screw crusher having a short blade width or blade length that performs crushing by compression.

Since the crushed product is obtained by applying impact force, breakage of the active material and the current collector having the lower melting point compared to the other current collector can be facilitated, while the current collector having the higher melting point compared to the other current collector does not change form and remains in the form of the foil or the like. Therefore, the current collector having the higher melting point is merely cut in the crushing step, and the current collector having the higher melting point is less likely to be finely ground compared to the current collector having the lower melting point. Thus, the crushed product, which can be effectively separated into the current collector having the lower melting point and the current collector having the higher melting point in the below-described classification and sorting step, can be obtained.

Duration of the crushing is not particularly limited, and may be appropriately selected according to the intended purpose. As the duration of the crushing, a processing time per 1 kg of the lithium ion secondary battery is preferably 1 second or longer and 30 minutes or shorter, more preferably 2 seconds or longer and 10 minutes or shorter, and particularly preferably 3 seconds or longer and 5 minutes or shorter. When the duration of the crushing is shorter than 1 second, the lithium ion secondary battery may not be sufficiently crushed. When the duration of the crushing is longer than 30 minutes, the lithium ion secondary battery may be excessively crushed. The maximum particle diameter of the crushed product is preferably 10 mm or less.

<Physical sorting step>

The physical sorting step is a process of performing physical sorting on the crushed product to obtain a physically processed product.

-Classification and sorting step-

As the physical sorting step, a classification and sorting step can be performed. The classification and sorting step includes classification of the crushed product obtained in the crushing step into a coarse-particle product and a fine-particle product. A classification method is not particularly limited, and may be appropriately selected according to the intended purpose. Examples of the classification method include a vibration sieve, a multistage vibration sieve, a cyclone, a standard sieve of JIS Z8801, a wet vibration table, an air table, and the like.

A classification point used in the classification and sorting step is not particularly limited, and may be appropriately selected according to the intended purpose. The classification point is preferably 0.45 mm or greater, and more preferably 0.6 mm or greater and 2.4 mm or less. If the classification point is greater than 2.4 mm, the amounts of the metal derived from the outer container and the metal having the higher melting point mixed into the fine-particle product increase, and therefore the performance of separating the metal derived from the outer container and the metal having the higher melting point from cobalt and nickel derived from the active material may decrease. On the other hand, if the classification point is less than 0.45 mm, the amounts of the metals derived from the current collector having the lower melting point and the active material mixed into the coarse-particle product increase, and contents of metals derived from the current collector having the higher melting point in the coarse-particle product is reduced so that a recovery rate of cobalt and nickel derived from the active material in the fine-particle product may become less than 60%. Moreover, when sieving is used as a classification method, a disintegration promoter, for example, stainless steel balls or alumina balls, are placed in the sieve, and sieving is performed to separate the small crushed product, which is attached to the large crushed product, from the large crushed product, thereby efficiently separating into the large crushed product and the small crushed product. Thus, the grade of the recovered metals can be further improved. Note that the crushing step and the classification and sorting step can be performed simultaneously. For example, a process of classifying the crushed product into a coarse-particle product and a fine-particle product (crushing and classification) may be performed while crushing the heat-treated product obtained in the heat treatment step.

By the classification described above, the metal derived from the outer container and the metals derived from the current collector having the higher melting point can be recovered as the coarse-particle product, and a concentrate of cobalt, nickel, and lithium derived from the active material can be recovered as the fine-particle product (black mass). Note that the fine-particle product may be subjected to classification again. The classification performed again can remove, for example, fine particles equal to or smaller than 150 $\mu$m from the fine-particle product, thereby reducing an amount of the negative-electrode active material component included in a non-magnetic material obtained by wet separation by magnetic force (the separation by magnetic force may be referred to as magnetic separation hereinafter).

-Magnetic separation step-

As the physical sorting step, a dry magnetic separation step may be performed on the crushed product obtained in the crushing step, or on the coarse-particle product obtained in the classification and sorting step. Iron is recovered as a magnetic material, and metals derived from the negative-electrode current collector, such as copper and the like are recovered as non-magnetic materials.

More preferably, as the physical sorting step, a wet magnetic separation step (wet magnetic separation) can be performed on the crushed product obtained in the crushing step, or the fine-particle product (black mass) obtained in the classification and sorting step. As a magnetic material, a concentrate of cobalt and nickel is recovered.

When the fine-particle product obtained in the classification and sorting step is subjected to magnetic separation, in the case of dry magnetic separation, particles are aggregated due to the moisture attached between the particles. Thus, cobalt particles and nickel particles cannot be sufficiently separated from the metal particles derived from the negative-electrode current collector and the negative-electrode active material particles that are included in an amount of 10% by mass or greater in the fine-particle product. In the present invention, the materials derived from the negative-electrode active material, and metals derived from the negative-electrode current collector are separated into non-magnetic slurry, and cobalt and nickel are recovered as the magnetic material in the wet magnetic separation step, thereby obtaining a physically processed product. Note that manganese is not ferromagnetic at room temperature, but when manganese forms a composite oxide together with cobalt and nickel in a lithium ion secondary battery, manganese accompanies cobalt and nickel when cobalt and nickel are magnetically separated. Therefore, a considerable amount of manganese is also recovered by magnetic separation. The magnetic force during the magnetic separation is preferably from 1,500 G to 8,000 G.

On the other hand, lithium is dissolved in the liquid during formation of the slurry of the raw materials and the wet magnetic separation, and is separated into non-magnetic material slurry. By subjecting the non-magnetic material slurry to solid-liquid separation, the metals derived from the negative-electrode current collector and the negative-electrode active material can be separated into the residues. In addition, carbon dioxide gas is blown into the liquid separated by the solid-liquid separation, and lithium is precipitated as lithium carbonate and recovered. Note that a pre-treatment step, such as a concentration step of the liquid for the purpose of removing impurities and increasing a lithium concentration, and the like may be performed before blowing of the carbon dioxide gas. For example, fluorine or the like is recovered in the remaining liquid. Thus, a fluorine content in the physically processed product can be less than 1%. Although a leaching process is needed to recover lithium and separate fluorine from cobalt and nickel, the present invention can reduce the number of steps because leaching of lithium with water and leaching removal of fluorine can be performed simultaneously with the separation of cobalt and nickel, which are the metals derived from the negative-electrode current collector in the wet magnetic separation step.

<Acid treatment step>

The acid treatment step is a process of adding an acidic solution to the physically processed product to obtain an acid-treated solution.

Specifically, the acid treatment step is a step of adding an acid, such as HCl, HNO$_3$, H$_2$SO$_4$, or the like to the physically processed product to dissolve metal elements in the acidic solution.

For example, the physically processed product after addition of the acid is heated for 0.1 hours to 3 hours at 20°C to 180°C, and the metal elements in the physically processed product are thermally decomposed and dissolved in an acidic solution. After the thermal decomposition is completed, the acidic solution is allowed to cool, and the acidic solution is filtered to remove insoluble residues in the acidic solution, thereby recovering a filtrate. Note that the acid may be used alone, or may be used in such a manner that, for example, HCL is added to the physically processed product and heated, and then $HNO_3$ is added and heated.

As a method of filtration, various methods can be used, for example, a membrane filter, filter paper, and the like. Use of cross-flow filtration is also preferred.

<Iron removal step>

The iron removal step is a step of adding an oxidizing agent to the acid-treated solution, followed by adding an alkaline solution, to precipitate iron oxide, and separating the iron hydroxide by filtration.

The oxidizing agent (hydrogen peroxide) is added to the acid-treated solution after the acid treatment step to adjust the redox potential to the positive side of 500 mVEh/V. Thereafter, the alkaline solution is added to the acid-treated solution having the adjusted redox potential to adjust the pH to the range of 3 to 5.5, thereby precipitating iron hydroxide. The filtrate and the precipitate of the iron hydroxide are separated from each other by filtration.

As a method of filtration, various methods can be used, for example, a membrane filter, filter paper, and the like. Use of cross-flow filtration is also preferred.

<Alkali treatment step>

The alkali treatment step is a step of mixing the filtrate after the iron removal step with an alkaline solution.

The filtrate after the iron removal step and the alkaline solution are mixed to adjust pH to the range of 9 to 14, thereby depositing metal elements in the filtrate as a precipitate of hydroxides.

For example, a 0.5 mol/L to 10 mol/L NaOH aqueous solution serving as the alkaline solution is added to the recovered filtrate to adjust pH of the filtrate to the range of 9 to 14, thereby precipitating hydroxides. After the addition of alkali is completed, the filtrate is filtered to recover the precipitate of hydroxides.

As a method of filtration, various methods can be used, for example, a membrane filter, filter paper, and the like. Use of cross-flow filtration is also preferred.

This is a step further including washing of the recovered precipitate of hydroxides to thereby obtain a recycled positive-electrode material precursor.

For example, the recovered precipitate of hydroxides is heated at 20°C to 200°C for 0.1 hours to 48 hours to perform strong heating and drying on the precipitate, thereby obtaining a dried product. The dried product is ground to obtain a ground product. Water in an amount equal to 10 times (by weight) the amount of the ground product is added to the ground product to obtain slurry. The obtained slurry is subjected to filtration to recover the precipitate of hydroxides.

As a method of filtration, various methods can be used, for example, a membrane filter, filter paper, and the like. Use of cross-flow filtration is also preferred.

The recovered precipitate of hydroxides is heated at 20°C to 200°C for 0.1 hours to 48 hours to dry the precipitate of hydroxides, thereby obtaining a recycled positive-electrode material precursor.

The obtained recycled positive-electrode material precursor is a solid material (solid). In the subsequent steps, the recycled positive-electrode material precursor may be handled as a solid material or formed into slurry. Even in the case of forming slurry, the recycled positive-electrode material precursor included in the slurry is still a solid material.

Note that salts remaining in the precipitate of hydroxides may be removed by washing after adding a lithium source to the recycled positive-electrode material precursor in the subsequent stage.

<Lithium-source addition step>

The lithium-source addition step is a step of adding the recycled positive-electrode material precursor and a predetermined amount of a lithium source together.

Examples of the lithium source includes lithium carbonate, lithium hydroxide, lithium nitrate, lithium chloride, and the like.

The amount of the lithium source is not particularly limited, and may be appropriately selected according to the intended purpose. The amount of the lithium source is preferably 0.8 molar equivalents or greater and 2.0 molar equivalents or lower relative to a total amount of hydroxides of the metals that are included in the recycled positive-electrode material precursor and function as a positive-electrode material.

<Grinding and mixing step>

The grinding and mixing step is a step of grinding the mixture in which the predetermined amount of the lithium source is added.

The mixture in which the predetermined amount of the lithium source is added is ground to thereby obtain a ground mixture. The grind can be performed by using, for example, a disk mill, a mixer mill, a bead mill, a vibration mill, a ball mill, a planetary ball mill, an attritor, or the like.

<Firing step>

The obtained ground mixture is fired in an aluminum crucible in an ambient air atmosphere under retained conditions, that is, at 600°C for 1 hour, followed by 900°C for 4 hours, to thereby obtain a fired product. The retaining temperature for the firing is preferably from 650°C to 900°C. The retaining time for the firing is preferably from 0.1 hours to 20 hours, and more preferably from 0.5 hours to 8 hours. Iron, copper, and aluminum are present as oxides in the recycled positive-electrode material after firing the recycled positive-electrode material precursor. Specifically, iron, copper, and aluminum, which are mostly present as hydroxides in the recycled positive-electrode material precursor, are turned into oxides.

<Grinding step>

The obtained fired product is ground by a disk mill or the like to thereby obtain a recycled positive-electrode material of the present invention.

As described above, a washing treatment may be performed on the ground product after the firing. In this case, a firing step may be carried out again after the washing treatment to thereby obtain a recycled positive-electrode material.

The obtained recycled positive-electrode material of the present invention includes: lithium, nickel, cobalt, and manganese; aluminum in an amount of 0.3% by mass or greater and 3.0% by mass or less; and copper, iron, or both in an amount of less than 1% by mass, achieves the same level of specific capacity as a lithium ion secondary battery using a typical positive-electrode material, and achieves cycle performance superior to cycle performance of a lithium ion secondary battery using a typical positive-electrode material.

In the production method of the recycled positive-electrode material of the present invention, the recycled positive-electrode material of the present invention can be used as a raw material.

In the case where there is a difference between a composition of metal elements of a recycled positive-electrode material functioning as a target positive-electrode material and a composition of metal elements of the obtained recycled positive-electrode material of the present invention, the composition of the metal elements of the recycled positive-electrode material can be adjusted. Specifically, a recycled positive-electrode material can be produced using the recycled positive-electrode material of the present invention as a raw material.

As a method of adjusting the composition of the metal elements, for example, a method of appropriately formulating a physically processed product having a composition of different metal elements, a method of adding a metal element that is lacking, or the like is considered. A specific amount of the metal element to be added may be determined based on results of qualitative and quantitative analysis of the metal elements included in the physically processed product by ICP spectroscopy or X-ray fluorescence spectroscopy.

(Method of using recycled positive-electrode material)

The method of using the recycled positive-electrode material of the present invention includes an assembly step and an activation step. The assembly step includes assembling of a lithium ion secondary battery including the recycled positive-electrode material of the present invention. The activation step includes charging of the lithium ion secondary battery, which is assembled in the assembly step, from approximately 0 V to a range of 4.3 V to 4.6 V of a cell voltage, followed by charging and discharging in a cell voltage range that has a lower end of 0 V to 3.5 V and an upper end of 4.3 V to 4.6 V to activate the lithium ion secondary battery. The method of using the recycled positive-electrode material may further include other steps, as necessary.

As the activation step, charging and discharging are preferably performed at the maximum cell voltage that is higher than 4.2 V that is maximum cell voltage for typical charging and discharging, by 0.1 V to 0.4 V, and more preferably higher by 0.2 V to 0.3 V. Specifically, a charge-discharge cycle can be performed one time to 5 times (preferably 3 times) at the maximum cell voltage in the range that has a lower end of 0 V to 3.5 V and an upper end of 4.3 V to 4.6 V, which is higher than the typical cell voltage range of 2.5 V to 4.2 V. In view of the charge-discharge cycle time, the minimum cell voltage is more preferably from 1.5 V to 3.5 V, and yet more preferably from 2.0 V to 3.0 V.

According to the method of using the recycled positive-electrode material of the present invention, the activation step is performed and therefore cycle performance superior to cycle performance of the positive-electrode material of a typical lithium ion secondary battery can be achieved.

(Recycled positive electrode)

The recycled positive electrode of the present invention includes the recycled positive-electrode material of the present invention, and may further include other components as necessary.

The recycled positive electrode includes the recycled positive-electrode material of the present invention as a positive-electrode active material, and further includes a conductive agent, a binder resin, and the like as other components.

The recycled positive electrode of the present invention has cycle performance superior to cycle performance of a positive-electrode material of a typical lithium ion secondary battery when a charge-discharge cycle is performed multiple times in the range of the maximum cell voltage that is higher, by 0.1 V to 0.4 V, than 4.2 V, which is the maximum cell voltage for typical charging and discharging.

(Lithium ion secondary battery)

The lithium ion secondary battery of the present invention is a lithium ion secondary battery including a positive electrode, a negative electrode, and a separator, where the positive electrode includes the recycled positive-electrode material of the present invention.

The lithium ion secondary battery can be produced using the recycled positive-electrode material of the present invention according to any method for lithium ion secondary batteries available in the related art.

The lithium ion secondary battery of the present invention including the recycled positive-electrode material of the present invention has cycle performance superior to cycle performance of a lithium ion secondary battery using a typical positive-electrode material in the maximum cell voltage range of 0 V to 4.6 V that is higher, by 0.1 V to 0.4 V, than 4.2 V, which is the maximum cell voltage for typical charging and discharging.

Moreover, the lithium ion secondary battery of the present invention including the recycled positive-electrode material of the present invention can achieve the same level of specific capacity as a lithium ion secondary battery using a typical positive-electrode material, and can exhibit cycle performance superior to cycle performance of a lithium ion secondary battery using a typical positive-electrode material, because the cell voltage is extended from a typical cell voltage range, which is from 2.5 V to 4.2 V, to the range that has a lower end of 0 V to 3.5 V and an upper end of 4.3 V to 4.6 V so that deintercalation of Li from the recycled positive electrode readily occurs and Li that has once been detached can go through repetitive intercalation and deintercalation thereafter.

Examples

Examples of the present invention will be described hereinafter, but the present invention is not limited to the below examples in any way.

(Comparative Example 1)

<Production of recycled positive-electrode material>

-Heat treatment step-

A heat treatment was performed on a battery pack (approximately 75 kg) of a lithium ion secondary battery serving as a processing target using a batch burner furnace of EcoSystem Akita Co., Ltd. serving as a heat treatment device at a heat treatment temperature of 800°C (elevating the temperature to 800°C over the period of 1 hour, followed by retaining the temperature at 800°C for 2 hours), thereby obtaining a heat-treated product.

-Crushing step-

Subsequently, the heat-treated product obtained in the heat treatment step (the lithium ion secondary battery on which the heat treatment was performed) was crushed by a hammer crusher (Makino-type Swing Hammer Crusher HC-20-3.7, produced by MAKINO MFG. CO. LTD.) as a crushing device at 50 Hz (hammer circumferential speed: 38 m/s) with an outlet screen having a grate opening hole of 30 mm × 200 mm, to thereby obtain a crushed product of the lithium ion secondary battery.

-Classification step-

Subsequently, the crushed product of the lithium ion secondary battery was sieved using a sieve having a sieve opening of 1.2 mm (diameter: 200 mm, produced by TOKYO SCREEN CO., LTD.) to sort the crushed product into an oversize product (coarse-particle product) and an undersize product (medium-particle product), to thereby obtain a crushed product as the undersize product (medium-particle product).

-Magnetic separation step-

Wet magnetic separation was performed on the obtained crushed product using a drum-type magnetic separator at a magnetic force of 1,500 G, a drum rotational speed of 45 rpm, a solid-liquid ratio of 10%, and a slurry feeding rate of 100 mL/min to thereby recover a physically processed product.

-Acid treatment step-

The obtained physically processed product in an amount of 5 g was placed in a 500 mL conical beaker, and 100 mL of hydrochloric acid (12 N) was added. The physically processed product was thermally decomposed for 1 hour using a hot plate set at 70°C to 100°C. When the reaction was completed, 100 mL of ion-exchanged water was added, followed by adding 100 mL of $HNO_3$ (14 N) to thereby prepare an acidic solution. Then, the acidic solution was subjected thermal decomposition for 1 hour using a hot plate set at 160°C until the reaction was completed. After the acidic solution was allowed to cool, insoluble residues in the acidic solution were removed using No. 5C filter paper, and the filtrate was collected.

-Alkali treatment step-

An NaOH aqueous solution having a concentration of approximately 7.5% by mass were added to the collected filtrate to adjust the pH value to 12, thereby precipitating hydroxides. Then, the hydroxides were collected using No. 5C filter paper. The collected hydroxides were dried in a thermostatic chamber set at 105°C, the dried hydroxides were ground in a mortar, and the ground hydroxides were added to a sufficient amount of ion-exchanged water to wash and remove water-soluble salts with the water. The hydroxides washed with the water were collected using No. 5C filter paper, the collected hydroxides were dried in a thermostatic chamber set at 105°C, to thereby obtain a recycled positive-electrode material precursor.

-Lithium-source addition step-

Lithium carbonate was added to the obtained recycled positive-electrode material precursor, where the amount of the lithium carbonate added was 1.0 molar equivalents relative to a total amount of hydroxides of cobalt, nickel, and manganese included in the recycled positive-electrode material precursor. The resultant mixture was ground and mixed by a disk mill to thereby obtain a ground mixture. The ground mixture was placed in an aluminum crucible and was fired in an ambient air atmosphere under conditions at 600°C for 1 hour, then at 800°C for 4 hours, to thereby obtain a fired product.
The fired product was ground by a disk mill to thereby obtain a recycled positive-electrode material of Comparative Example 1.

(Example 1)

A recycled positive-electrode material of Example 1 was obtained in the same manner as in Comparative Example 1, except that the acid treatment step of Comparative Example 1 was replaced with the following acid treatment step, the following iron removal step was performed between the acid treatment step and the alkali treatment step, and 1.25 molar equivalents of lithium carbonate was added to the obtained recycled positive-electrode material precursor relative to a total amount of hydroxides of cobalt, nickel, and manganese included in the recycled positive-electrode material precursor.

-Acid treatment step-

The obtained physically processed product in an amount of 30 g was placed in a 1,000 mL upright beaker, and 1,000 mL of 20% by mass sulfuric acid was added to prepare an acidic solution. Then, the acidic solution was subjected to thermal decomposition for 4 hours using a hot plate set at 150°C. After the acidic solution was allowed to cool, the insoluble residues in the acidic solution were removed using No. 5C filter paper to thereby collect a filtrate.

-Iron removal step-

An oxidizing agent (hydrogen peroxide) was added to the acidic solution after the acid treatment step to adjust the redox potential to 650 mV (Ag/AgCl). Then, an alkaline solution was added to the acid-treated solution having the adjusted redox potential to adjust pH to 4.7, thereby precipitating iron hydroxide. The filtrate and the precipitate of iron oxide were separated from each other by filtration.

(Comparative Example 2)

A commercially available typical cobalt-nickel-manganese-based positive-electrode material ($LiNi_{1/3}Co_{1/3}Mn_{1/3}O_2$, PLB-H1, produced by Gelon LIB Group Ltd.) was provided.

Next, each of the obtained recycled positive-electrode materials was subjected to acid decomposition with an acid mixture of HCl and $HNO_3$, and then analyzed using ICP-AES (SPECTRO GREEN, produced by Hitachi High-Tech Science Corporation). The results are presented in Tables 1 and 2. Note that a unit of an amount of each element in Tables 1 and 2 is % by mass.

[Table 1]

|  | Mn | Co | Ni | Li | Cu | Fe | Al | Na |
|---|---|---|---|---|---|---|---|---|
| EX. 1 | 24.69 | 15.06 | 18.80 | 8.24 | 0.00050 | 000327 | 1.06 | 0.05122 |
| COMP. EX. 1 | 17.30 | 16.12 | 20.40 | 7.33 | 2.18 | 1.24 | 1.71 | 0.03837 |
| COMP. EX. 2 | 18.57 | 19.87 | 20.17 | 7.19 | 0 | 0.00088 | 0 | 0.00729 |

[Table 2]

|  | Ca | Mg | O (diff.) | Total CuFeAl | Al/ CuFeAl | Total MnCoNi | Co/ CoMnNi |
|---|---|---|---|---|---|---|---|
| EX. 1 | 0.03878 | 0.04633 | 32.01 | 1.06 | 1.00 | 58.55 | 0.26 |
| COMP. EX. 1 | 0.04660 | 0.03224 | 33.59 | 5.14 | 0.33 | 53.82 | 0.30 |
| COMP. EX. 2 | 0.00934 | 0.00834 | 34.17 | 0.00 | 0.00 | 58.61 | 0.34 |

<Production of battery>

(1) Production of positive electrode

Each of the recycled positive-electrode materials of Example 1 and Comparative Examples 1 and 2 serving as an active material, acetylene black (Denka Black, produced by Denka Company Limited) serving as a conductive auxiliary agent, polyvinylidene fluoride (KF Polymer F #9130, produced by Kureha Corporation) serving as a binder, and N-methylpyrrolidone serving as a solvent were provided.

Then, the above materials were mixed with a ratio of recycled positive-electrode material/acetylene black/polyvinylidene fluoride being 80:10:10 (% by mass) to prepare a mixture. To the mixture, N-methylpyrrolidone was added to prepare slurry. The amount of N-methylpyrrolidone added to the mixture as determined by a mass ratio of the mixture/N-methylpyrrolidone was 1:1.25.

After stirring the obtained slurry for 10 minutes with a stirrer, the slurry was applied using a Baker-type film applicator to form a coating, and the coating was dried in a drier set at 100°C. After pressing the dried coating at 4 t, the pressed coating was punched out to produce a piece having a diameter of 15 mm, thereby producing a positive electrode.

(2) Production of negative electrode

Graphite (CGB-10, produced by Nippon Graphite Industries, Co., Ltd.) serving as an active material, acetylene black (Denka Black, produced by Denka Company Limited) serving as a conductive additive, carboxymethyl cellulose (Celogen 7A, produced by DKS Co., Ltd.) and styrene-butadiene rubber (TRD2001, produced by JSR Corporation) serving as binders, and pure water serving as a solvent were provided.

Then, the above materials were mixed with a ratio of graphite/acetylene black/carboxymethyl cellulose/styrene-butadiene rubber being 90:5:2.5:2.5 (% by mass) to prepare a mixture. Distilled water was added to the mixture to obtain slurry. The amount of the distilled water added to the mixture as determined by a mass ratio of the mixture/distilled water was 1:1.6.

Stirring, coating, drying, pressing, and punching were performed on the obtained slurry in the same manner as in the above-described production of the positive electrode to thereby produce a negative electrode.

(3) Assembly of lithium ion secondary battery

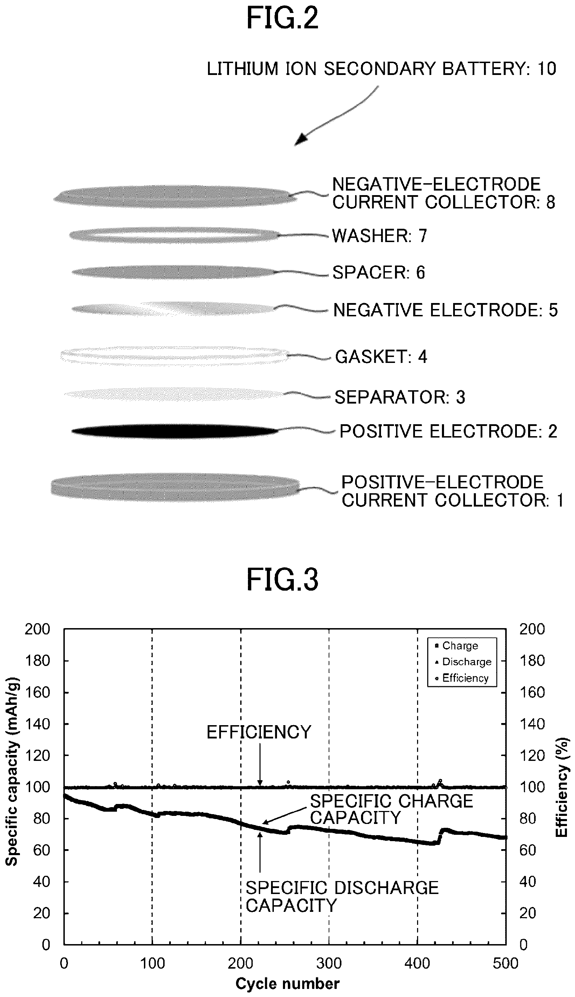

A positive-electrode current collector 1, the positive electrode 2, a separator 3, a gasket 4, the negative electrode 5, a spacer 6, a washer 7, and a negative-electrode current collector 8 were stacked in this order as illustrated in Fig. 2 using a CR2032 coin cell to assemble a full cell according to each of Example 1 and Comparative Examples 1 and 2 in a glove box filled with pure argon gas. The full cell included the graphite as the active material, and the assumed specific capacity of the graphite was 340 mAh/g.

Note that porous polypropylene (#2500, produced by Celgard LLC) having a diameter of 19 mm was used as the separator, $LiPF_6$ having a concentration of 1 mol/L was used as a solute of the electrolytic solution, and ethylene carbonate and diethyl carbonate (volume ratio of 1:1) were used as the solvent.

In the case of the full cell, assumed specific capacity of a typical positive-electrode material and that of the recycled positive-electrode material were varied in the range of 100 mAh/g to 150 mAh/g according to the cell voltage range during charging and discharging, but a ratio (NP ratio) of the capacity of the negative electrode to the capacity of the positive electrode was 1.2. The assumed specific capacity of the positive-electrode material used in the full cell is specified each time.

**3.** Charge-discharge test of battery

Each of the produced full cells according to Example 1 and Comparative Examples 1 and 2 was subjected to a charge-discharge test by a cycle test as described below, to measure charge-discharge specific capacity and coulomb efficiency (charge and discharge efficiency, hereinafter simply referred to as efficiency) of each of the recycled positive-electrode materials of Example 1 and Comparative Examples 1 and 2. In the case of the full cell, the performance of the cell was evaluated by the positive-electrode reference specific capacity determined by dividing the capacity of the cell measured during charging and discharging of the cell by the mass of the recycled positive-electrode material in the cell.

(1) Charge-discharge test of full cell

(I) (Cycle test of full cell)

Charging and discharging were performed at a constant current density under the following conditions.

Test temperature: 25°C
Cell voltage range: 2.5 V to 4.2 V (initial charging: 0 V to 4.2 V)
Current density: 2C
Number of cycles: 500 cycles
Assumed specific capacity of typical positive-electrode material: 140 mAh/g, provided that 1 C of a typical positive-electrode material is 140 mA/g
Assumed specific capacity of recycled positive-electrode material: 100 mAh/g, provided that 1 C of the recycled positive-electrode material is 100 mA/g

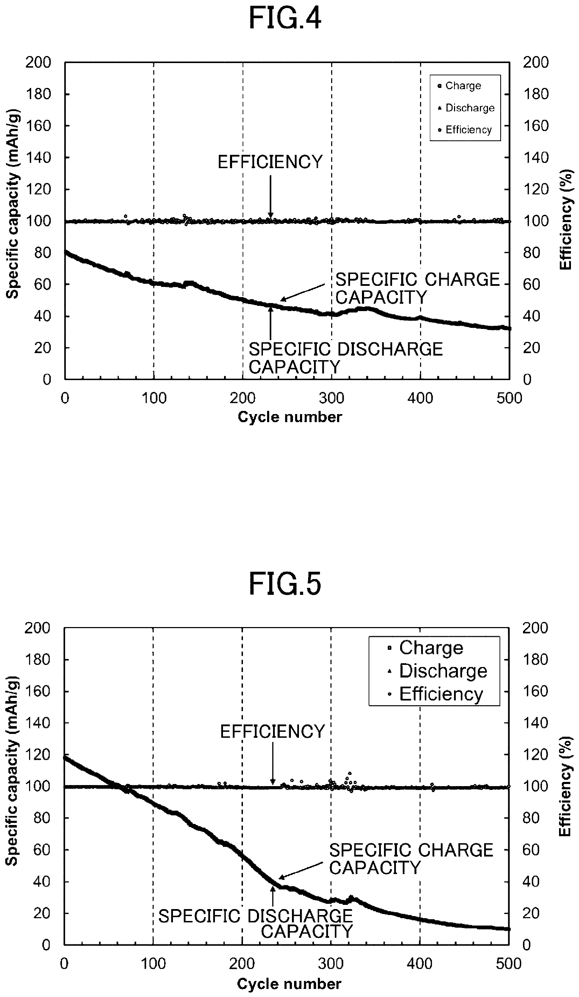

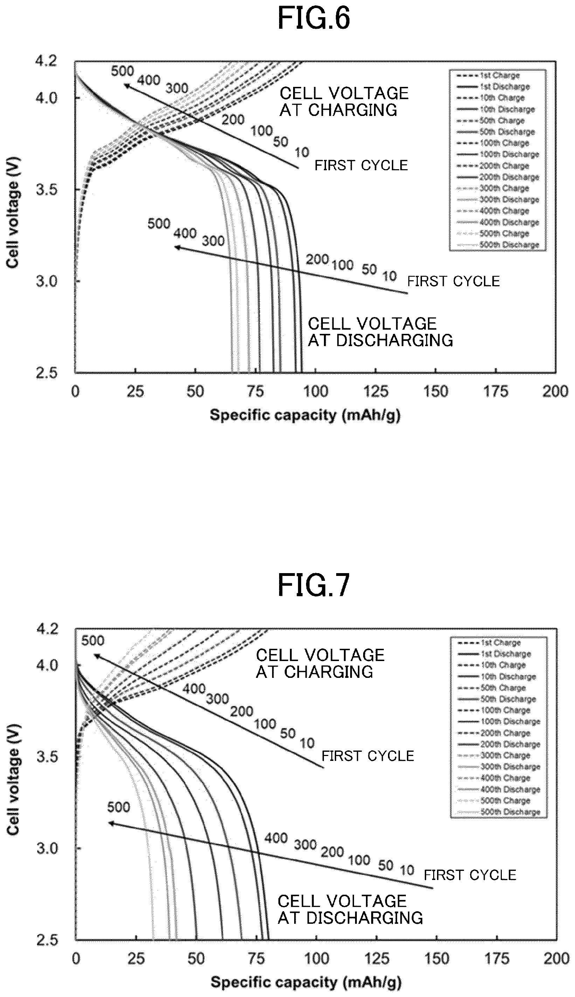

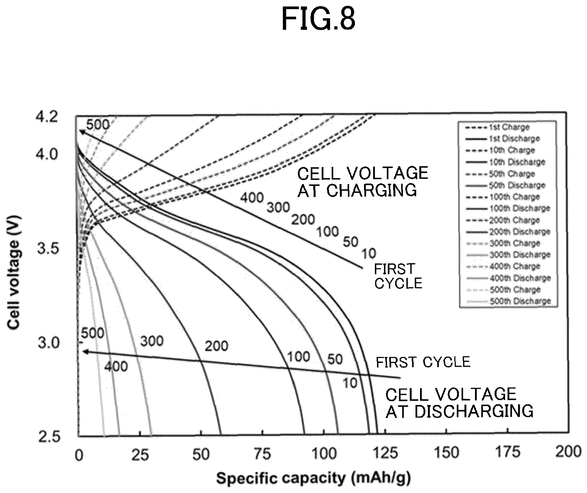

The results of the relation between the number of cycles and the specific capacity characteristics in the cycle test are presented in Figs. 3 to 5 and Table 3. Moreover, the results of relations between the specific capacity and the cell voltage in the cycle test are presented in Figs. 6 to 8. In Figs. 3 to 5, the horizontal axis represents the number of cycles, the left vertical axis represents the specific capacity, and the right vertical axis represents the efficiency. When the specific charge capacity was plotted as □, the specific discharge capacity was plotted as ◊, and the efficiency was plotted as ○, the plots of the specific charge capacity (□) and the plots of the specific discharge capacity (◊) overlapped.

[Table 3]

| | Cycle test (2.5V~4.2 V) | | | | |
|---|---|---|---|---|---|
| | 2 C, 1st cycle, Li-ion insertion (mAh/g) | 2 C, 200th cycle, Li-ion insertion (mAh/g) | 2 C, 200th cycle, Retention (%) | 2 C, 500th cycle, Li-ion insertion (mAh/g) | 2 C, 500th cycle, Retention (%) |
| EX. 1 | 94.3 | 76.8 | 81.5 | 67.9 | 72.0 |

(continued)

| | Cycle test (2.5V~4.2 V) | | | | |
| --- | --- | --- | --- | --- | --- |
| | 2 C, 1st cycle, Li-ion insertion (mAh/g) | 2 C, 200th cycle, Li-ion insertion (mAh/g) | 2 C, 200th cycle, Retention (%) | 2 C, 500th cycle, Li-ion insertion (mAh/g) | 2 C, 500th cycle, Retention (%) |
| COMP. EX. 1 | 80.1 | 50.2 | 62.6 | 32.2 | 40.1 |
| COMP. EX. 2 | 118.0 | 56.3 | 47.7 | 10.1 | 8.5 |

(II) (Cycle test of full cell in range of 2.5 V to 4.4 V (initial charging: 0 V to 4.4 V))

A cycle test was performed in the same manner as above, except that the cell voltage range was expanded to the range of 2.5 V to 4.4 V. The assumed specific capacity of each positive-electrode material was determined as 150 mAh/g, provided that 1 C was 150 mA/g. The results are presented in Table 4.

[Table 4]

| | Cycle test (2.5V~4.4 V) | | | | |
| --- | --- | --- | --- | --- | --- |
| | 2 C, 1st cycle, Li-ion insertion (mAh/g) | 2 C, 200th cycle, Li-ion insertion (mAh/g) | 2 C, 200th cycle, Retention (%) | 2 C, 500th cycle, Li-ion insertion (mAh/g) | 2 C, 500th cycle, Retention (%) |
| EX. 1 | 127.3 | 103.7 | 81.4 | 68.8 | 54.1 |
| COMP. EX. 1 | 65.7 | 1.3 | 2.0 | 1.0 | 1.6 |
| COMP. EX. 2 | 126.2 | 0.9 | 0.7 | 0.7 | 0.5 |

It was found that a significant effect of improving cycle performance could be exhibited as compared with Comparative Examples 1 and 2, when charging and discharging were performed in advance in the range of the maximum cell voltage higher, by 0.2 V, than 4.2 V, which was the maximum cell voltage for typical charging and discharging.

This indicated that, when the maximum cell voltage was increased, that is, when the potential of the positive electrode was increased, deintercalation of Li from the recycled positive electrode of Example 1 readily occurred, and Li that was once detached could go through repetitive intercalation and deintercalation thereafter. Example 1 realized the specific capacity superior to the specific capacity of Comparative Examples 1 and 2, when the full cell of Example 1 was used at the typical cell voltage range, i.e., 2.5 V to 4.2 V. It was found that, when the full cell of Example 1 was used in the high maximum cell voltage range, i.e., 2.5 V to 4.4 V, an effect of improving cell characteristics became more significant as compared with Comparative Examples 1 and 2.

(III) (Cycle test of full cell in range of 2.5 C to 4.2 V after three cycles in range of 2.5 V to 4.4 V at 0.1 C)

A cycle test was performed on the full cell of Example 1 in the same manner as above, except that after three cycles of charging and discharging were performed in the range of 2.5 V to 4.4 V (initial charging: 0 V to 4.4 V) and at 0.1 C, the cycle test was performed in the cell voltage range of 2.5 V to 4.2 V. The assumed specific capacity of the positive-electrode material was determined as 140 mAh/g, provided that 1 C was 140 mA/g. The results are presented in Table 5.

(Example 2)

(IV) (Cycle test of full cell in range of 2.5 V to 4.2 V after three cycles in range of 2.5 V to 4.3 V at 0.1 C)

Three cycles of charging and discharging were performed on a full cell assembled in the same manner as in Example 1 in the range of 2.5 V to 4.3 V (initial charging: 0 V to 4.3 V) at 0.1 C. Then, the cycle test was performed in the cell voltage range of 2.5 V to 4.2 V in the same manner as above. In this case, the assumed specific capacity of the positive-electrode material was determined as 140 mAh/g, provided that 1 C was 140 mA/g. The results are presented in Table 5.

(Example 3)

(V) (Cycle test of full cell in range of 2.5 V to 4.2 V after three cycles in range of 2.5 V to 4.5 V at 0.1 C)

After performing three cycles of charging and discharging a full cell assembled in the same manner as in Example 1 in the range of 2.5 V to 4.5 V (initial charging: 0 V to 4.5 V) at 0.1 C, a cycle test was performed at a cell voltage range of 2.5 V to 4.2 V in the same manner as above. In this case, the assumed specific capacity of the positive-electrode material was also determined as 140 mAh/g, provided that 1 C was 140 mA/g. The results are presented in Table 5.

[Table 5]

| | Cycle test (2.5V~4.2 V) | | | | |
|---|---|---|---|---|---|
| | 2 C, 1st cycle, Li-ion insertion (mAh/g) | 2 C, 200th cycle, Li-ion insertion (mAh/g) | 2 C, 200th cycle. Retention (%) | 2 C, 500th cycle, Li-ion insertion (mAh/g) | 2 C, 500th cycle, Retention (%) |
| EX. 1 | 114.8 | 110.0 | 95.8 | 105.5 | 91.9 |
| EX. 2 | 91.5 | 85.0 | 92.9 | 77.7 | 84.9 |
| EX. 3 | 90.6 | 91.3 | 100.8 | 80.8 | 89.2 |

It was found from the results of Table 5 that, even when the assumed specific capacity of the positive-electrode material was determined as 140 mAh/g, the full cell of Example 1 exhibited the superior cycle performance by performing three cycles of charging and discharging in advance in the range of 2.5 V to 4.4 V at 0.1 C, as compared with the case where three cycles of charging and discharging in the range of 2.5 V to 4.4 V at 0.1 C were not performed in advance, and as compared with the full cells of Comparative Examples 1 and 2.

The specific capacity of the recycled positive-electrode material in the full cell of Example 1 was higher than those of the full cells of Examples 2 and 3, and moreover the full cell of Example 1 maintained a retention rate of the specific capacity after the cycle test.

As compared with Example 2, the recycled positive-electrode material exhibited high cycle stability by going through a process of activating the cell at a high voltage as in Examples 1 and 3. Since decomposition of the electrolytic solution of the lithium ion secondary battery is highly likely to be accelerated at a cell voltage higher than 4.6 V, it is confirmed that the highest cell voltage in the activation step is preferably from 4.3 V to 4.5 V, and more preferably 4.4 V.

This international application is based upon and claims priority to Japanese Patent Application No. 2022-096429, filed on June 15, 2022, and Japanese Patent Application No. 2022-165994, filed on October 17, 2022, the entire contents of which are incorporated herein by reference.

DESCRIPTION OF REFERENCE NUMERALS

1 positive-electrode current collector
2 positive electrode
3 separator
4 gasket
5 negative electrode
6 spacer
7 washer
8 negative-electrode current collector
10 lithium ion secondary battery

**Claims**

1. A recycled positive-electrode material, comprising:

   lithium, nickel, cobalt, and manganese;
   aluminum in an amount of 0.3% by mass or greater and 3% by mass or less; and
   copper, iron, or both in an amount of less than 1% by mass.

2. The recycled positive-electrode material according to claim 1, further comprising:

calcium, magnesium, or both in an amount of 0.02% by mass or greater and 0.1% by mass or less.

3. The recycled positive-electrode material according to claim 1 or 2,
   wherein the amount of the aluminum is 0.5% by mass or greater and 2.5% by mass or less.

4. The recycled positive-electrode material according to claim 1 or 2,
   wherein an amount of the lithium is 5% by mass or greater and 9% by mass or less.

5. The recycled positive-electrode material according to claim 1 or 2,

   wherein an amount of the copper is 0.01% by mass or less, and
   an amount of the iron is 0.6% by mass or less.

6. The recycled positive-electrode material according to claim 5,

   wherein the amount of the copper is 0.0005% by mass or greater and 0.005% by mass or less, and
   the amount of the iron is 0.002% by mass or greater and 0.6% by mass or less.

7. The recycled positive-electrode material according to claim 1 or 2,
   wherein the amount (% by mass) of the aluminum (Al), an amount (% by mass) of the copper (Cu), and an amount (% by mass) of the iron (Fe) satisfy the following formula:

$$Al/(Al + Cu + Fe) \geq 0.4.$$

8. The recycled positive-electrode material according to claim 1 or 2,
   wherein a total amount of the nickel, the cobalt, and the manganese is 50% by mass or greater.

9. A method of producing the recycled positive-electrode material of claim 1 or 2, the method comprising:

   a process of performing a heat treatment on a lithium ion secondary battery to obtain a heat-treated product;
   a process of crushing the heat-treated product to obtain a crushed product;
   a process of performing physical sorting on the crushed product to obtain a physically processed product;
   a process of adding an acidic solution to the physically processed product to obtain an acid-treated solution;
   a process of adding an oxidizing agent to the acid-treated solution, followed by adding an alkaline solution, to precipitate iron oxide, and separating the iron hydroxide by filtration; and
   a process of mixing a filtrate obtained after the separation of the iron hydroxide with an alkaline solution.

10. The method of producing the recycled positive-electrode material, according to claim 9, further comprising a process of adding a lithium source.

11. A method of using a recycled positive-electrode material, the method comprising:

    a process of assembling a lithium ion secondary battery including the recycled positive-electrode material of claim 1 or 2; and
    a process of charging the lithium ion secondary battery assembled in the assembling from approximately 0 V to a range of 4.3 V to 4.6 V of a cell voltage, followed by charging and discharging in a cell voltage range having a lower end of 0 V to 3.5 V and having an upper end of 4.3 V to 4.6 V to activate the lithium ion secondary battery.

12. A recycled positive electrode, comprising:
    the recycled positive-electrode material of claim 1 or 2.

13. A lithium ion secondary battery, comprising:
    the recycled positive electrode of claim 12.

# FIG.1

LITHIUM ION SECONDARY BATTERY AS PROCESSING TARGET

↓

| HEAT TREATMENT STEP |

↓

HEAT TREATED PRODUCT

↓

| CRUSHING STEP |

↓

| CLASSIFICATION STEP |

↓

FINE-PARTICLE PRODUCT (BLACK MASS)

↓

| MAGNETIC SELECTION STEP |

↓

PHYSICALLY PROCESSED PRODUCT

↓

ADD ACID ⟶ | ACID TREATMENT STEP |

↓

FILTRATE

↓

| IRON REMOVAL STEP |

↓

FILTRATE

↓

ADD ALKALI ⟶ | ALKALI TREATMENT STEP |

↓

PRECIPITATE

↓

ADD WATER ⟶ | WASHING STEP |

↓

RECYCLED POSITIVE ELECTRODE PRECURSOR

↓

ADD LITHIUM COMPOUND ⟶ | LITHIUM-SOURCE ADDITION STEP |

↓

| FIRING STEP |

↓

| GRINDING STEP |

↓

RECYCLED POSITIVE ELECTRODE

# FIG.2

LITHIUM ION SECONDARY BATTERY: 10

NEGATIVE-ELECTRODE
CURRENT COLLECTOR: 8

WASHER: 7

SPACER: 6

NEGATIVE ELECTRODE: 5

GASKET: 4

SEPARATOR: 3

POSITIVE ELECTRODE: 2

POSITIVE-ELECTRODE
CURRENT COLLECTOR: 1

# FIG.3

## FIG.4

## FIG.5

## FIG.6

## FIG.7

# FIG.8

## INTERNATIONAL SEARCH REPORT

| | International application No. |
|---|---|
| | **PCT/JP2023/019970** |

### A. CLASSIFICATION OF SUBJECT MATTER

*H01M 4/525*(2010.01)i; *C01G 53/00*(2006.01)i; *C22B 1/02*(2006.01)i; *C22B 3/06*(2006.01)i; *C22B 3/22*(2006.01)i; *C22B 3/44*(2006.01)i; *C22B 7/00*(2006.01)i; *C22B 23/00*(2006.01)i; *C22B 26/12*(2006.01)i; *C22B 47/00*(2006.01)i; *H01M 4/131*(2010.01)i; *H01M 4/505*(2010.01)i; *H01M 10/54*(2006.01)i

FI:  H01M4/525; H01M4/505; H01M10/54; H01M4/131; C22B7/00 C; C22B1/02; C22B3/06; C22B3/44 101A; C22B3/22; C22B3/44; C22B23/00 102; C22B26/12; C22B47/00; C01G53/00 A

According to International Patent Classification (IPC) or to both national classification and IPC

### B. FIELDS SEARCHED

Minimum documentation searched (classification system followed by classification symbols)

H01M4/525; C01G53/00; C22B1/02; C22B3/06; C22B3/22; C22B3/44; C22B7/00; C22B23/00; C22B26/12; C22B47/00; H01M4/131; H01M4/505; H01M10/54

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | CN 111825110 A (NINGXIA BAICHUAN NEW MATERIAL CO., LTD.) 27 October 2020 (2020-10-27)<br>paragraphs [0043]-[0052], example 1 | 1-10, 12-13 |
| Y | | 11 |
| Y | JP 2019-091571 A (THE FURUKAWA BATTERY CO., LTD.) 13 June 2019 (2019-06-13)<br>paragraphs [0047], [0065] | 11 |
| A | CN 111206148 A (NINGBO RONBAY LITHIUM BATTERY MATERIALS CO., LTD.) 29 May 2020 (2020-05-29)<br>example 1, tables 1, 2 | 1-13 |
| A | CN 112239232 A (XI'AN FUYAN SHIDAI NEW ENERGY CO., LTD.) 19 January 2021 (2021-01-19)<br>example 1, tables 1, 2 | 1-13 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 July 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/019970** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2014-156649 A (NIPPON MINING & METALS CO., LTD.) 28 August 2014 (2014-08-28) claims, table 8 | 1-13 |

Form PCT/ISA/210 (second sheet) (January 2015)

INTERNATIONAL SEARCH REPORT
Information on patent family members

International application No.

**PCT/JP2023/019970**

| Patent document cited in search report | | | Publication date (day/month/year) | Patent family member(s) | Publication date (day/month/year) |
|---|---|---|---|---|---|
| CN | 111825110 | A | 27 October 2020 | (Family: none) | |
| JP | 2019-091571 | A | 13 June 2019 | (Family: none) | |
| CN | 111206148 | A | 29 May 2020 | (Family: none) | |
| CN | 112239232 | A | 19 January 2021 | (Family: none) | |
| JP | 2014-156649 | A | 28 August 2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5847742 B